# EUROPEAN PATENT APPLICATION

(11) **EP 0 592 173 A1**
(43) Date of publication of application: **13.04.1994**
(21) Application number: 93307871.9
(22) Date of filing: 04.10.1993
(51) Int. Cl.: G01F 1/28, G01F 1/24, G01P 5/02, G01P 5/04

(54) **Air flow sensor apparatus**

(30) Priority: 07.10.1992 JP 293850/92
(71) Applicant: TEXAS INSTRUMENTS INCORPORATED, Dallas Texas 75265 (US)
(72) Inventor: Yamashita, Takahisa, Suntoh-Gun, Shizuoka (JP); Hibino, Yasushi, Suntogun, Shizuoka (JP); Tsuchiya, Hikari, Gotenba-shi, Shizuoka (JP); Kushida, Osami, Gotenba-shi, Shizuoken-ken (JP)
(74) Representative: Abbott, David John

(57) **Abstract**

An air flow sensor (1) includes first and second electrodes (11,12) of electrically conductive, flexible material. A body (13) supports the first and second electrodes (11,12) and is configured so that the posterior side has a smooth curved streamline surface. When the first electrode (11) receives the air the electrode (11) is deflected by the air pressure so as to change the spacing between the first and second electrodes (11,12). The air flow to be injected to a combustion engine is measured by utilizing the change of capacitance between the electrodes. A second embodiment includes a strain detection element (24) sandwiched between a cantilever mounted electrode (21) and a support electrode (22). Flow impinging upon the cantilever mounted electrode places pressure upon the strain detection element changing its voltage output.

## Description

### Background of the Invention

This invention relates generally to gas flow sensors and more particularly to a gas flow sensor for the measurement of gas flow in an electronically controlled fuel injection system of a motor vehicle by way of example.

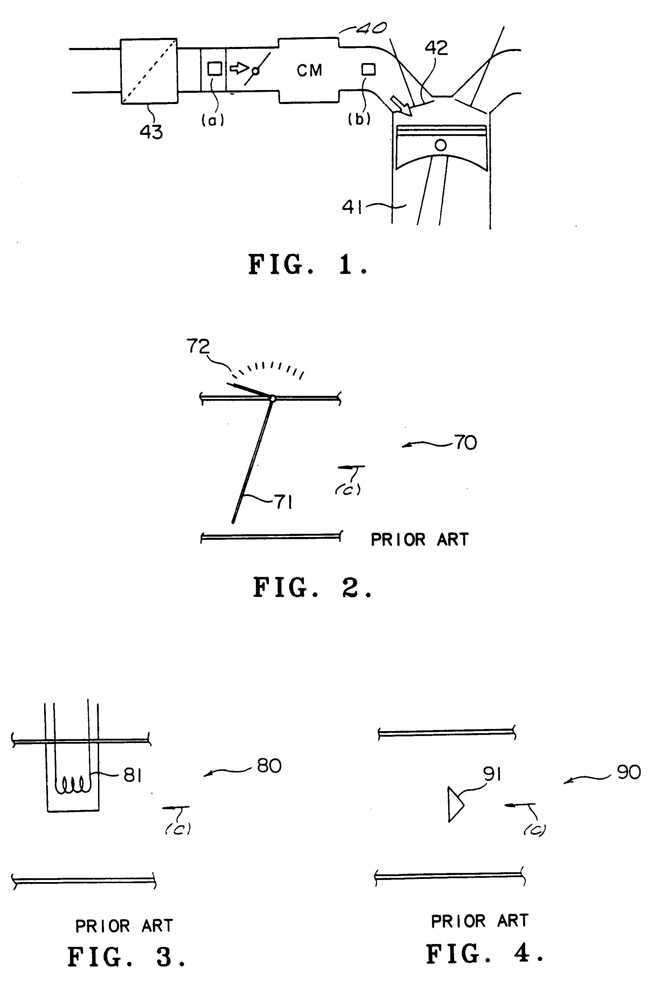

Three types of conventional air or gas flow sensors described below are arranged at a location indicated at (a) in Fig. 1 in an electronically controlled fuel injection system 40 in order to measure the flow of air that flows inside electrically controlled fuel injection system 40.

A first conventional air flow sensor 70 of the "Bayne type" is shown in Fig. 2. An air flow sensor of the Bayne type measures the flow of the air by reading the angle of wing 71 that is produced by the flow of air indicated by arrow (c) by means of a potentiometer 72. Problems associated with this type of sensor include the fact that the potentiometer 72 has an electrical contact which results in a problem regarding durability. Further, where there are pulsations in the air current, there is a problem in that the action does not stabilize. Since it is necessary to arrange wing 71 in the air current, there is also a problem in that the pressure loss at this part becomes large.

An air flow sensor 80 of the hot wire type is shown in Fig. 3. An air flow sensor 80 of the hot wire type measures the flow of air utilizing the change in resistance value of the wire based on the cooling effect. Problems with this type of sensor include the fact that extremely fine platinum resistance wire 81 is used in such sensors and dust, etc. tends to adhere to its surface, with a consequence that the output signal tends to become unstable. There is an added problem in that the sensor tends to be affected by pulsation as it is too sensitive to the variations in the air flow.

An air flow sensor 90 of the "Carman Boltex" type is shown in Fig. 4. An air flow sensor 90 of the Carman Boltex type places a wedge-shaped member 91 as shown in the drawing in an air current and counts the Carman vortexes that are generated, thereby measuring the air flow. Methods for counting the Carman vortexes utilize supersonic waves and light. Problems with this type of sensor include the fact that such sensors tend to be affected by pulsations of the air current at a time when the Carman vortexes are counted, with no accurate measurement being carried out at the location where this pulsation exists.

Here, the term "pulsation" of the air current means the variations in the air current that are generated due to the opening or closing of the intake valve 42.

In the event where the above air flow sensors are placed at a location, close to the combustion chamber 41, shown in Fig. 1 at (b), where the environmental conditions are unsatisfactory due to the many pulsations in the air current, there is a problem in terms of durability and accuracy even though there is a faster response of the air flow sensor as the volume of air is small on the down stream side (on the side of the combustion chamber (41) in the electronically controlled fuel injection system.

In the case where the above air flow sensors are located as shown in Fig. 1 at (a) where there is little pulsation (intake pulsation) in the air current and where the environmental conditions are comparatively satisfactory, there is a problem in that the response delay is developed with the air flow on the down stream side serving as cause therefor.

Fig. 5 indicates on the same graph the degree of accelerator opening (d) and the output signal of the air flow sensor (e) by installing an air flow sensor 80 of the hot wire type at a location shown in Fig. 1 at (a).

Fig. 6 indicates on the same graph the degree of accelerator opening (f) and the output of the air flow volume sensor (g) by installing an air flow volume sensor 80 of the hot wire type at a location which is closer to the combustion chamber 41 than the position indicated in Fig. 1 at (a).

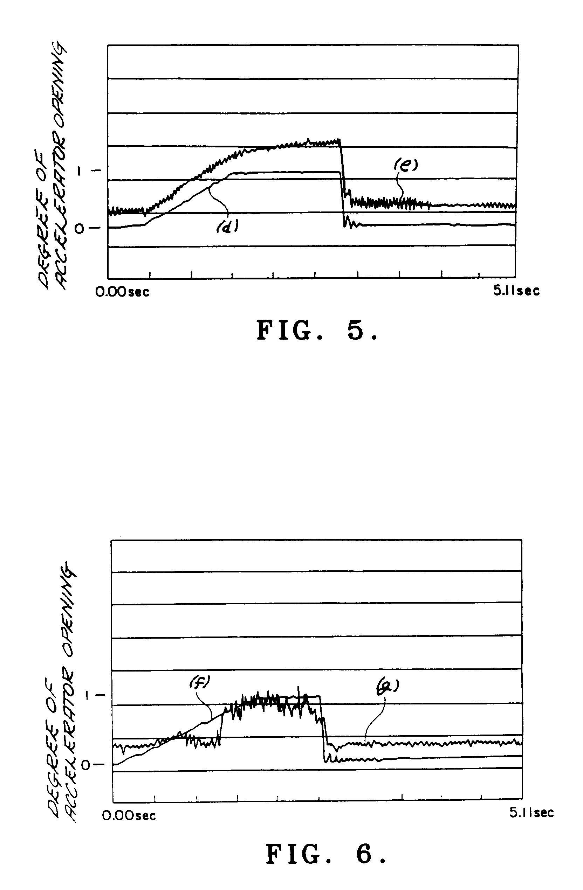

A comparison between Figs. 5 and 6 reveals the fact that, in the case where the air flow sensor 80 of the hot wire type is located closer to the combustion 41 than the location indicated in Fig. 1 at (a), the output signal of the air flow sensor is affected by the intake pulsation, thereby becoming extremely unstable.

In addition, there is a problem in that the exhaust gas becomes worse and a problem arises in the transitional control of the engine combustion due to the response delay in the above various air flow sensors.

### Summary of the Invention

It is an object of the present invention to provide an air flow sensor free of the limitations and disadvantages of the above noted prior art. Another object is the provision of an air flow sensor which is durable having high accuracy and reliability and one which is insensitive to the effects of intake pulsations. Yet another object is the provision of an air flow sensor which is insensitive to the effects of dust and the like and which is suitable for placement at an optimum location with minimal restriction near the combustion chamber in an electronically controlled fuel injection system in order to, by way of example, provide fast response and which is capable of preventing the exacerbation of exhaust gas that may develop during the transitional control of engine combustion.

Briefly, in accordance with the invention, a gas flow sensor made according to this invention comprises a base having an anterior face portion that receives pressure in conformance with gas flow that is to be measured and having a posterior configuration which results in the sensor being unaffected by back pressure, the first electrode being cantilever mounted in such a way as to receive the pressure at the anterior portion of the base which deflects in conformance with the pressure level. The second electrode is mounted in the base with a prescribed gap from the first electrode and in a manner so that it is not deflected by the pressure.

The capacitance between the first and second electrodes in the electronically controlled fuel injection system changes in conformance with the amount of flow of the air current. This capacitance is detected and is outputted as a measure of air current flow.

In accordance with a second embodiment, a strain detection element is disposed between a first cantilever, flexible electrode and a support electrode. The pressure placed on this element changes in conformance with the flow of the air current to which the cantilever is subjected. The strain detection element produces a voltage corresponding to this pressure. This electric voltage is detected and is outputted as an air flow measure. A back pressure deflecting member is attached to the free distal end of the cantilever electrode to deflect reverse pulses of air in the same manner as the posterior body portion of the first embodiment.

These together with other objects and advantages which will become subsequently apparent reside in the details of construction and operation as more fully hereinafter described and claimed, reference being had to the accompanying drawings forming a part thereof, wherein like numerals refer to like parts throughout.

### Brief Description of the Drawings

Fig. 1 is a schematic representation of an electronically controlled fuel injection system;
Figs. 2-4 show conventional flow sensors;
Fig. 5 shows a graph of the output signal of a prior art air flow sensor and the degree of accelerator opening with the sensor disposed at a location identified in Fig. 1 at (a);
Fig. 6 is a graph similar to Fig. 5 but with the air flow sensor disposed at a location which is closer to the combustion chamber than the location identified in Fig. 1 at (a);

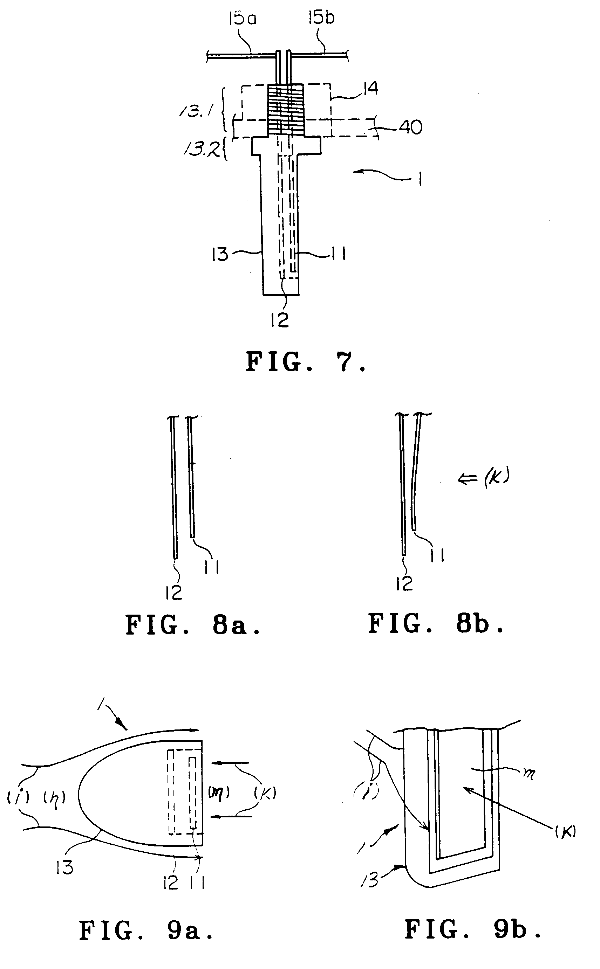

Fig. 7 shows an air flow sensor made in accordance with a first embodiment of the invention;
Figs. 8A and 8B show the first and second electrodes of the Fig. 7 sensor in the at rest position and when subjected to air flow, respectively;
Figs. 9A and 9B are bottom plan and perspective views respectively of the Fig. 7 sensor;

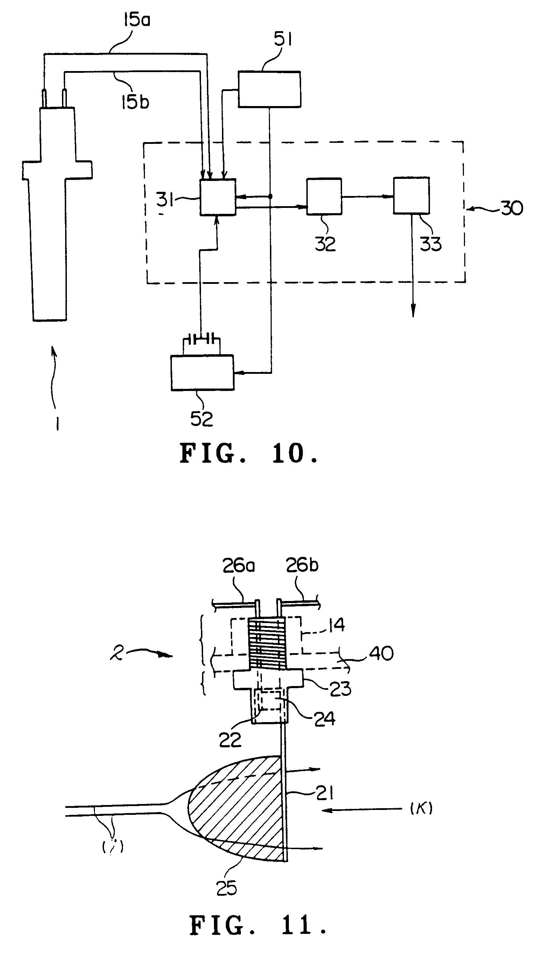

Fig. 10 is a schematic representation of a system incorporating the Fig. 7 sensor and incorporating a capacitance detection circuit;
Fig. 11 shows an air flow sensor made in accordance with a second embodiment of the invention; and

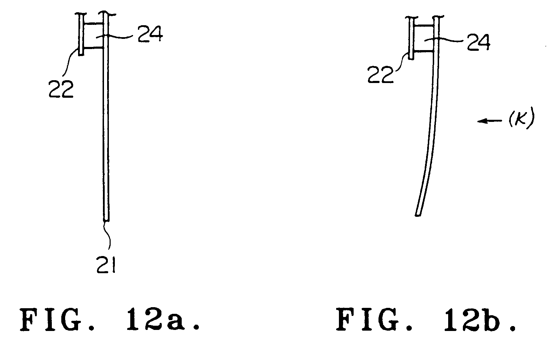

Figs. 12A and 12B show the first and second electrodes of the Fig. 11 sensor in the at rest position and when subjected to air flow, respectively.

### Detailed Description of the Preferred Embodiments

Referring to the drawings in detail, Figs. 7-9B show an air flow sensor identified by numeral 1 made in accordance with a first embodiment of the invention.

Air flow sensor 1, disposed in an electronically controlled fuel injection system as shown in Fig. 1 (such as a mass-flow type fuel injection system), is subjected to its air flow (intake) with the first electrode 11 that is formed of a cantilever mounted, electrically conductive flexible member, being deflected by the pressure of the intake flow, as a result of which the gap from the second electrode 12 changes and the change in capacitance is utilized for a measurement of the air flow volume. Electrodes 11 and 12, generally aligned with each other and co-extensive in length, in effect form capacitor plates of a variable capacitor.

In Fig. 7 the first electrode 11 is cantilever supported by a body 13 at the anterior face portion thereof and at a prescribed distance from and in opposition to a second electrode 12 so that it possesses a capacitance vis-a-vis the second electrode 12. The second electrode 12 is supported on the back wall of a recess formed in body 13 so that it does not deflect when the sensor is subjected to air flow.

The first electrode 11 extends in a direction which is parallel to the direction in which the second electrode 12 extends as shown in Fig. 8A in the at rest position where no air flow is being received. Electrode 11 is relatively thin having opposed front and back faces having relatively large surface areas with the outer face serving as a flow sensor. When air flow occurs electrode 11 is deflected as shown in Fig. 8B, as a result of which the gap vis-a-vis the second electrode 12 is reduced and capacitance is increased.

Body 13, composed of any suitable electrically insulating member has a screw thread formed at one end at 13.1 which is adapted to be inserted into a hole for the air flow sensor installation of the electronically controlled fuel injection system 40 and is mounted to the electronically controlled fuel injection system 40 by means of a nut 14.

An outwardly extending flange 13.2 is provided at the lower part of the screw thread of body 13 and this flange cooperates with the screw thread for the sensor installation of the electronically controlled fuel injection system 40 and, since it is constructed in such a way as to maintain the air-tightness or seal of the electronically controlled fuel injection system 40, air flow sensor 1 can be securely mounted and tightly sealed in the electronically controlled fuel injection system 40.

It is mentioned in connection with the mounting of air flow sensor 1 to the electronically controlled fuel injection system 40 that the air seal may further be improved by using a rubber packing or the like.

Regarding air flow sensor 1, the posterior (pulsation receiving part) of body 13 is configured having a smooth curved surface. This streamlined surface shown, for example, by (h) in Fig. 9A, is arranged facing the combustion chamber 41 and the intake valve 42 (Fig. 1) of the electronically controlled fuel injection system 40. Because of this, the intake pulsation from the intake valve 42 flows in the direction indicated by an arrow (i) in Figs. 9A and 9B and does not affect the first electrode 11.

Meanwhile, air flow from air cleaner 43 flows in a direction which is indicated by an arrow (k) in Figs. 9A and 9B, impinges upon the anterior air flow receiving part as shown by (m) in Figs. 9A and 9B, thereby giving such a deflection, as has been described above, accurately to the first electrode 11.

Electric wires 15a and 15b are connected to the first electrode 11 and the second electrode 12, respectively for transmitting the output signals.

In Fig. 10, the capacitance detection circuit 31 is a circuit that detects the capacitance between the first electrode 11 and the second electrode 12 of the first air flow sensor 1 on the basis of the capacitance information that is outputted from the first air flow sensor 1 through the electric wires 15a and 15b and the output signal that comes from an oscillation circuit 51 and a switching circuit 52 and that inputs same in the filter circuit 32. The filter circuit 32 is a circuit that filters the output of the capacitance detection circuit 31, removes the noise portion and outputs same at the buffer circuit 33. The buffer circuit 33 is a circuit that buffers the output of the filter circuit 32 and outputs same from the electrostatic detection device 30 as a measurement of air flow.

Operation of the air flow sensor 1 will be explained below:

The air flow sensor 1 is mounted in the electronically controlled fuel injection system 40 by a nut 14 at a location which is shown in Fig. 1 at (b) in accordance with the aforementioned method.

As has been described above, that location is a location where the intake pulsation from the intake valve 42 is large. However, it flows to the side because of the shape of the posterior portion of body 13 and does not affect the first electrode 11.

The air flow that impinges upon the first electrode 11, meanwhile, gives a deflection as has been explained above with reference to Fig. 8B. As a result of this, the capacitance between the first electrode 11 and the second electrode 12 changes. This capacitance is outputted to the capacitance detection device 30 through the electric wires 15a and 15b.

This capacitance is detected by the capacitance detection device 30 and is outputted as a measurement of air flow in the electronically controlled fuel injection system 40. This air flow information is used as a parameter for fuel injection control in a control circuit (which is not shown in the drawings) of the electronically controlled fuel injection system 40.

Air flow sensor 1 can be placed at a location indicated in Fig. 1 at (b) of the electronically controlled fuel injection system 40 where the conventional air flow volume sensor could not be placed due to the construction which has been described above.

Because of the above, response of the air flow sensor 1 becomes faster, the problem that is developed in the transitional control of the engine can be eliminated, and any worsening of the exhaust gas can be prevented.

As the body 13 has such a configuration as has been described above and as the posterior portion of the sensor is arranged in the electronically controlled fuel injection system 40 in such a way as to face the side of the intake valve 42, air flow sensor 1 is insensitive to intake pulsation.

In addition, air flow sensor 1 is insensitive to the effect of dust, etc. because of the absence of any contact, its accuracy is high and it is durable.

Because of a simple structure, air flow sensor 1 can be made smaller in size and lighter in weight than the conventional air flow sensor. Because of this, there will be fewer restrictions upon the placement of the electronically controlled fuel injection system 40.

An air flow sensor made in accordance with a second embodiment of the invention is identified by numeral 2 in Fig. 11. Air flow sensor 2 employs a strain detection element 24 such as a piezoelectric element that has been placed between a cantilever mounted electrode 21 and a support electrode 22. Cantilever mounted electrode 21 comprises an electrically conductive flexible member, supported by a body 23, mounted facing support electrode 22 by sandwiching strain detection element 24 therebetween. A pressure dependent upon air flow is exerted on strain detection element 24.

The cantilever mounted electrode 21 extends in a direction parallel with the direction in which the support electrode 22 extends as shown in Fig. 12A in the at rest condition, in the absence of an air current. In the case where there is an air flow, however, it is deflected as shown in Fig. 12B, as a result of which the distance from the support electrode 22 is narrowed and the pressure that is applied to the strain detection element 24 is increased.

Body 23 is composed of an electrically insulating material and supports the cantilever electrode 21 which extends away from body 23 to a free distal end and the support electrode 22 which is essentially disposed completely within body 23. A screw thread 23.1 is provided at one end of body 23 and an outwardly extending flange 23.2 is provided at the lower part of the screw groove of body 23.

Screw thread 23.1 and flange 23.2 are for the purpose of mounting air flow sensor 2 in the electronically controlled fuel injection system 40. The method of mounting the sensor is the same as was explained in connection with body 13 of sensor 1 of the first embodiment.

Strain detection element 24 is arranged between the cantilever electrode 21 and the support electrode 22 and outputs a voltage corresponding to the pressure that is applied by the deflection of the cantilever electrode 21.

A back pressure preventing or deflecting member 25 formed with a smooth, curved, streamlined posterior surface in the shape, in cross-section as shown in Fig. 11, of a parabola to cite an example, is attached to the free distal end of cantilever mounted electrode 21 in any suitable manner. Deflecting member 25 reduces the effect of the intake pulsation upon the cantilever mounted electrode in a manner similar to the pulsation receiving portion of body 13 of air flow sensor 1. Although pulsation received on member 25 will have some minimal tendency to deflect electrode 21, such tendency is greatly reduced by the streamline posterior surface.

Air flow volume sensor 2 is mounted to the electronically controlled fuel injection system 40 with the posterior portion of back pressure deflection member 25 facing the side of the combustion chamber 41. Because of this, the intake pulsation from the intake valve 42 flows in the direction indicated by (i) in Fig. 11 and has minimal affect on the cantilever mounted electrode 21.

Meanwhile, air current from the air cleaner 42 flows in the direction which is indicated by (k) in Fig. 11 and impinges directly upon cantilever mounted electrode 21 and accurately deforms the cantilever mounted electrode 21.

Electric wires 26a and 26b are connected to the cantilever mounted electrode 21 and the support electrode 22 respectively and transmit the output signal.

Operation of air flow sensor 2 will be explained below:

Air flow sensor 2 is fixed by a nut 14 at a location which is shown in Fig. 1 at (b) by the aforementioned method in the electronically controlled fuel injection system 40.

As described above, this location is a location where the intake pulsation from the intake valve 42 is large. However, the intake pulsation flows to the side due to the shape of the back pressure deflection member 25 and does not materially affect the cantilever mounted electrode 21.

Meanwhile, the air current that impinges upon the cantilever mounted electrode 21 deflects electrode 21 as has been explained above with reference to Fig. 12B. As a result of this, there takes place a change in the pressure that is applied to the strain detection element 24 sandwiched between the cantilever mounted electrode 21 and the support electrode 22, with a consequence that there is produced a change in the voltage that is produced in the strain detection element 24. This voltage is outputted to a voltage detection device (not shown in the drawings) through electric wires 26a and 26b.

This output voltage is used as a measure of air flow in the electronically controlled fuel injection system 40. This air flow information is used as a parameter for fuel injection control in the electronically controlled fuel injection system 40.

By constructing air flow sensor 2 in this manner, it becomes possible to obtain an effect which is similar to that which is obtained from air flow volume sensor 1 as explained in connection with the first embodiment.

In the above embodiments, example of the gas flow sensor according to this invention in the electronically controlled fuel injection system have been explained. It goes without saying that the gas flow sensor according to this invention can be used in areas other than the electronically controlled fuel injection system.

In addition, the gas flow sensor according to this invention can be used in the flow measurement of various gases such as oxygen, nitrogen, etc. in addition to the measurement of the air flow volume as described in the aforementioned example.

The gas flow sensor according to this invention can assume various constructions other than those described in various examples above. The various examples described above are merely exemplary.

Accordingly the air flow volume sensor of this invention is insensitive to the effect of dust, etc. because of the absence of any contacts, its accuracy is high, it is insensitive to the effects of intake pulsation, it is high durable, can be set up at a location where the response can be quick in the neighborhood of the combustion chamber in the electronically controlled fuel injection system and, by solving the problem that arises in the transitional control of the engine combustion, it can prevent any worsening of the exhaust gas.

## Claims

1. A gas flow sensor comprising a base formed of electrically insulative material, a first elongated, flexible electrode having an end cantilever mounted on the base, the electrode being relatively thin with opposed front and back faces having relatively large surface areas, one face serving as a sensing face facing in a selected direction, a second electrode mounted in the base spaced from the first electrode, a gas flow deflection surface disposed adjacent the first electrode on a side of the first electrode remote from the one face, the gas flow deflection surface having a smooth curved configuration to deflect gas which may be flowing in a reverse direction relative to the selected direction, and-means to mount the sensor with the sensor face facing a flow of gas to be measured.

2. A gas flow sensor according to claim 1 in which the base has anterior and posterior portions, a recess is formed in the anterior portion, the recess having a back wall portion, the first electrode being disposed in the recess spaced from the back wall portion, the second electrode being elongated and mounted on the back wall aligned with and opposite the first electrode, the deflection surface being formed on the posterior portion of the base.

3. A gas flow sensor according to claim 2 in which the means to mount the sensor includes a threaded portion for reception in an aperture in a wall and a flange extending radially outwardly from the base contiguous to the threaded portion, the flange serving to seal the sensor to the wall.

4. A gas flow sensor according to claim 1 further including a strain detection element sandwiched between the end of the first electrode and the second electrode.

5. A gas flow sensor according to claim 1 in which the first and second electrodes are essentially co-extensive in length having a gap therebetween and form respective first and second plates of a variable capacitor the gap, between the electrodes varying in response to changes in the flow of gas in which the sensor is disposed and further including electrical circuit means responsive to the change in capacitance to measure gas flow.

6. A gas flow sensor according to claim 4 in which the first electrode extends away from the base to a free distal end spaced from the base, the second electrode being disposed essentially completely within the base and the gas flow detection surface is attached to the free distal end of the first electrode.

7. A gas flow sensor comprising a base having an anterior face portion adapted to be impinged by the flow of gas that is to be measured and being configured with a smooth, curved posterior surface to deflect reverse pulses of gas in order to minimize the influence of back pressure, a first electrode disposed adjacent the anterior face portion and being exposed to the gas flow, the first electrode deflecting in response to the degree of pressure caused by the gas flow, a second electrode arranged in the base at a prescribed distance from the first electrode aligned with and opposed to the first electrode and being fixed in the base so that the second electrode is not deflected by the gas flow and means for the detection of the amount of capacitance between the first and the second electrodes.

8. A gas flow sensor comprising a member which receives a pressure corresponding to the gas flow that is to be measured and which deflects in conformance with the pressure level, a gas flow deflecting surface disposed in back of the member to minimize the effect of the back pressure and a means for detecting the pressure corresponding to the deformation of the member.
